# EUROPÄISCHE PATENTSCHRIFT

(11) **EP 4 221 930 B1**
(45) Veröffentlichungstag und Bekanntmachung des Hinweises auf die Patenterteilung: **23.04.2025**
(21) Anmeldenummer: 21786859.5
(22) Anmeldetag: 01.10.2021
(51) Int. Cl.: B23K 26/38, B23K 31/00, G05B 19/406, G06N 3/02, G06N 3/04

(54) **VERFAHREN, VORRICHTUNG, UND COMPUTERPROGRAMMPRODUKT ZUM AUFZEIGEN DES EINFLUSSES VON SCHNEIDPARAMETERN AUF EINE SCHNITTKANTE**
METHOD, DEVICE, AND COMPUTER PROGRAM PRODUCT FOR DISPLAYING THE INFLUENCE OF CUTTING PARAMETERS ON A CUTTING EDGE
PROCÉDÉ, DISPOSITIF, ET PRODUIT-PROGRAMME INFORMATIQUE POUR MONTRER L'INFLUENCE DE PARAMÈTRES DE COUPE SUR UNE ARÊTE DE COUPE

(30) Priorität: 02.10.2020 DE 102020212510
(43) Veröffentlichungstag der Anmeldung: 09.08.2023
(73) Patentinhaber: TRUMPF Werkzeugmaschinen SE + Co. KG, 71254 Ditzingen (DE)
(72) Erfinder: TATZEL, Leonie Felica, 70825 Korntal (DE)
(74) Vertreter: Trumpf Patentabteilung
(86) Internationale Anmeldenummer: PCT/EP2021/077086
(87) Internationale Veröffentlichungsnummer: WO 2022/069702

(56) Entgegenhaltungen:
- DE-A1- 102018 129 425
- US-A1- 2013 178 952
- S. BACH ET AL: "On Pixel-Wise Explanations for Non-Linear Classifier Decisions by Layer-Wise Relevance Propagation", PLOS ONE, vol. 10, no. 7, 1 January 2015 (2015-01-01), US, pages e0130140, XP055228790, ISSN: 1932-6203, DOI: 10.1371/journal.pone.0130140
- J. STAHL ET AL: "Quick roughness evaluation of cut edges using a convolutional neural network", SPIE PROCEEDINGS; [PROCEEDINGS OF SPIE ISSN 0277-786X], SPIE, US, vol. 11172, 16 July 2019 (2019-07-16), pages 111720P - 111720P, XP060124902, ISBN: 978-1-5106-3673-6, DOI: 10.1117/12.2519440

## Beschreibung

### Hintergrund der Erfindung

Die Erfindung betrifft ein Verfahren zur Analyse einer von einer Werkzeugmaschine erstellten Schnittkante entsprechend dem Oberbegriff des Anspruchs 1 (siehe z.B. J. STAHL ET AL: "Quick roughness evaluation of cut edges using a convolutional neural network", SPIE PROCEEDINGS, SPIE, US, Bd. 11172, 16. Juli 2019, Seiten 111720P-111720P). Die Erfindung betrifft weiterhin eine Vorrichtung zur Durchführung des Verfahrens, und ein Computerprogrammprodukt, siehe Ansprüche 9 und 10.

Es ist bekannt, das Schneiden von Werkstücken zu optimieren. Beispielsweise offenbart die DE 10 2017 105 224 A1, ein neuronales Netzwerk einzusetzen, um einen Laserschneidprozess zu regeln.

Allerdings sind die meisten Schneidvorgänge bzw. die Einflüsse von Schneidparametern auf die Schnittkanten nicht vollständig verstanden. Dies kann beispielsweise folgenden Artikeln entnommen werden:
Hügel, H., Graf, T. Laser in der Fertigung: Strahlquellen, Systeme, Fertigungsverfahren. Wiesbaden: Vieweg + Teubner, 2009.

Petring, D., Schneider, F., Wolf, N. Some answers to frequently asked questions and open issues of laser beam cutting. In: International Congress on Applications of Lasers & Electro-Optics. ICALEOR 2012, Anaheim, California, USA: Laser Institute of America, 2012, S. 43-48

Steen, W. M., Mazumder, J. Laser Material Processing. London: Springer London, 2010.

Auch erfahrene Nutzer der Schneidanlagen können in der Regel nicht vorhersagen, wie sich die Schneidparameter auf das Aussehen der Schnittkante auswirken. Um das Aussehen einer Schnittkante zu verbessern, insbesondere bei Problemen aufgrund veränderter Materialqualität und/oder bei neuen Prozessen unter Nutzung einer neuen Laserquelle, neuer Blechdicke etc., müssen daher regelmäßig aufwändige Testreihen mit verschieden variierten Schneidparametern durchgeführt werden.

### Aufgabe der Erfindung

Es ist demgegenüber Aufgabe der Erfindung, ein Verfahren, ein Computerprogrammprodukt und eine Vorrichtung bereit zu stellen, die in der Lage sind, den Einfluss der Schneidparameter auf die Schnittkante zu analysieren.

### Beschreibung der Erfindung

Diese Aufgabe wird erfindungsgemäß gelöst durch ein Verfahren gemäß Anspruch 1, ein Computerprogrammprodukt gemäß Anspruch 10 und eine Vorrichtung gemäß Anspruch 9. Die Unteransprüche geben bevorzugte Weiterbildungen wieder.

Die erfindungsgemäße Aufgabe wird somit gelöst durch ein Verfahren, bei dem eine, mehrere Aufnahmepixel aufweisende, Aufnahme einer mit einer Werkzeugmaschine erstellten Schnittkante eingelesen wird. Zur Ermittlung zumindest eines Schneidparameters, insbesondere mehrerer Schneidparameter, aus der Aufnahme wird ein Algorithmus mit einem neuronalen Netz eingesetzt. Anschließend erfolgt eine Rückpropagation im neuronalen Netz zur Bestimmung der Relevanz der einzelnen Aufnahmepixel für die Bestimmung der zuvor ermittelten Schneidparameter. Dann erfolgt eine Ausgabe der Aufnahme unter Markierung zumindest einiger Aufnahmepixel, wobei die Markierung die zuvor bestimmte Relevanz der Aufnahmepixel widerspiegelt. Vorzugsweise werden alle Aufnahmepixel ausgegeben und gemäß ihrer Relevanz markiert.

Ein Nutzer sieht somit an der markierten Ausgabe sofort, wie stark die jeweiligen Bereiche der Schnittkante vom jeweiligen Schneidparameter bzw. den jeweiligen Schneidparametern beeinflusst wurde und kann dann eine Anpassung dieses Schneidparameters bzw. dieser Schneidparameter vornehmen, um gezielt einen bestimmten Bereich der Schnittkante zu verändern.

Die Rückpropagation eines neuronalen Netzes ist beispielsweise aus der EP 3 654 248 A1 bekannt geworden.

Üblicherweise wird eine solche Rückpropagation ("backpropagation-based mechanisms") nur verwendet, um zu überprüfen, ob ein neuronales Netz die richtigen Zusammenhänge gelernt hat. Dabei geht es um neuronale Netze, die keine "superhuman performance" haben. Der Mensch kann in diesem Fall problemlos beurteilen, was die richtige Information ist. Z.B. kann man so untersuchen, ob ein neuronales Netz, das Hunde von Katzen unterscheiden kann, wirklich den Hund im Bild erkennt, wenn es angibt, dass es sich um einen Hund handelt und nicht die Wiese betrachtet, auf der der Hund steht. Beispielsweise kann es vorkommen, dass das neuronale Netz statt einem bestimmten Tier (z.B. einem Pferd) im Bild einen Schriftzug im Bild erkennt, der auf allen Pferdebildern zu sehen ist (sogenannte "Clever-Hans-Problematik"). Vorliegend wird demgegenüber die Rückpropagation eingesetzt, um Produktionsprozesse bzw. physikalische Zusammenhänge beim Schneidprozess zu verstehen oder zumindest vorhersagen zu können.

Unter einem neuronalen Netz wird dabei eine Architektur verstanden, die zumindest eine, insbesondere mehrere, Daten-Aggregations-Routinen aufweist. Eine Daten-Aggregations-Routine kann ausgelegt sein, mehrere "ermittelte Daten" zu einem neuen Datenpaket zu aggregieren. Das neue Datenpaket kann eine oder mehrere Zahlen oder Vektoren aufweisen. Dem neuen Datenpaket können vollständig oder teilweise weitere Daten-Aggregations-Routinen als "ermittelte Daten" zur Verfügung gestellt werden. "Ermittelte Daten" können insbesondere Schneidparameter oder von einer der Daten-Aggregations-Routinen zur Verfügung gestellte Datenpakete sein. Besonders bevorzugt ist die Architektur mit mehreren verbundenen Daten-Aggregations-Routinen ausgebildet. Insbesondere können mehrere hundert, insbesondere mehrere tausend, solcher Daten-Aggregations-Routinen miteinander verbunden werden. Die Qualität des neuronalen Netzes wird hierdurch deutlich verbessert.

Die Architektur kann dabei eine Funktion mit gewichteten Variablen aufweisen. Eine, insbesondere mehrere, besonders bevorzugt alle, Daten-Aggregations-Routinen können ausgelegt sein, mehrere "ermittelte Daten" jeweils mit einer gewichteten Variablen zu kombinieren, insbesondere zu multiplizieren, und so die "ermittelten Daten" zu "kombinierten Daten" umzuwandeln um dann die "kombinierten Daten" zu einem neuen Datenpaket zu aggregieren, insbesondere zu addieren. Bei dem neuronalen Netz können Daten mit Gewichten multipliziert werden. Die Informationen mehrerer Neuronen können addiert werden. Weiterhin kann das neuronale Netz eine nichtlineare Aktivierungsfunktion aufweisen.

Die in der Aufnahme enthaltenen Schnittkantenmerkmale können hierbei selbst Datenpakete, insbesondere mehrere strukturierte Daten, insbesondere Datenvektoren oder Daten-Arrays, sein, die selbst wieder "ermittelte Daten", insbesondere für die Daten-Aggregations-Routinen, darstellen können.

Zur Ermittlung geeigneter gewichteter Variablen, d.h. zum Training des neuronalen Netzes, kann das Verfahren durchlaufen werden mit Daten, insbesondere Schneidparametern, deren Zusammengehörigkeit zu Aufnahmen jeweils bekannt ist.

Das neuronale Netz ist dabei vorzugsweise in Form eines convolutional neural network (CNN) mit mehreren Schichten (layer) ausgebildet. Das convolutional neural network kann convolutional layer und pooling layer aufweisen. Pooling layer sind typischerweise zwischen zwei aufeinanderfolgenden convolutional layer angeordnet. Alternativ oder zusätzlich dazu kann nach jeder Faltung ein Pooling durchgeführt werden.

Zusätzlich zu den convolutional layern und pooling layern kann ein CNN fully connected layer, insbesondere ganz am Ende des neuronalen Netzes, aufweisen. Die convolutional layer und pooling layer extrahieren Merkmale, die fully connected layer können die Merkmale den Schneidparametern zuordnen.

Das neuronale Netz kann mehrere Filter pro layer aufweisen. Der Aufbau eines convolutional neural networks kann beispielsweise folgenden Artikeln, insbesondere dem nachfolgend erstgenannten, entnommen werden:
LeCun Y, Bengio Y, Hinton G (2015) Deep learning; Nature 521:436{444, DOI 10.1038/nature14539;
Lin H, Li B, Wang X, Shu Y, Niu S (2019); Automated defect inspection of LED chip using deep convolutional neural network; J Intell Manuf; 30:2525{2534, DOI 10.1007/s10845-018-1415-x;
Fu G, Sun P, Zhu W, Yang J, Cao Y, Yang MY, Cao Y (2019); A deep-learning-based approach for fast and robust steel surface defects classification; Opt Laser Eng 121:397{405, DOI 10.1016/j.optlaseng.2019.05.005;
Lee KB, Cheon S, Kim CO (2017) A Convolutional Neural Network for Fault Classification and Diagnosis in Semiconductor Manufacturing Processes; IEEE T Semiconduct M 30:135{142, DOI 10.1109/TSM.2017.2676245;
Gonçalves DA, Stemmer MR, Pereira M (2020) A convolutional neural network approach on bead geometry estimation for a laser cladding system; Int J Adv Manuf Tech 106:1811{1821, DOI 10.1007/s00170-019-04669-z;
Karatas A, Kölsch D, Schmidt S, Eier M, Seewig J (2019) Development of a convolutional autoencoder using deep neuronal networks for defect detection and generating ideal references for cutting edges; Munich, Germany, DOI 10.1117/12.2525882;
Stahl J, Jauch C (2019) Quick roughness evaluation of cut edges using a convolutional neural network; In: Proceedings SPIE 11172, Munich, Germany, DOI 10.1117/12.2519440.

Zur Rückpropagation hat sich die layer-wise relevance propagation (LRP) als besonders zielführend und gleichzeitig einfach implementierbar erwiesen. Die layer-wise relevance propagation kann insbesondere folgenden Artikeln entnommen werden:
Bach S, Binder A, Montavon G, Klauschen F, Müller KR, Samek W (2015) On Pixel-Wise Explanations for Non-Linear Classifier Decisions by Layer-Wise Relevance Propagation; PLoS ONE 10:e0130140, DOI 10.1371/journal.pone.0130140;
W Samek, A Binder, G Montavon, S Lapuschkin, K Müller (2017) Evaluating the Visualization of What a Deep Neural Network Has Learned. IEEE T Neur Net Lear 28:2660{2673, DOI 10.1109/ TNNLS.2016.2599820;
Montavon G, Lapuschkin S, Binder A, Samek W, Müller KR (2017) Explaining Non-Linear Classification Decisions with Deep Taylor Decomposition; Pattern Recognition 65:211{222, DOI 10.1016/j. patcog.2016.11.008;
Montavon G, Lapuschkin S, Binder A, Samek W, Müller KR (2015) Explaining Non-Linear Classification Decisions with Deep Taylor Decomposition; arXiv preprint URL https://arxiv.org/pdf/1512.02479.pdf;
Montavon G, Binder A, Lapuschkin S, Samek W, Müller KR (2019) Layer-Wise Relevance Propagation: An Overview. In: Samek W, Montavon G, Vedaldi A, Hansen LK, Müller KR (eds) Explainable AI: Interpreting, Explaining and Visualizing Deep Learning, Springer, Cham, Switzerland, pp 193{209.

Die Rückpropagation, insbesondere in Form der layer-wise relevance propagation, basiert vorzugsweise auf der deep taylor decomposition (DTD). Die deep taylor decomposition kann insbesondere folgendem Artikel entnommen werden:
Montavon G, Lapuschkin S, Binder A, Samek W, Müller KR (2017) Explaining Non-Linear Classification Decisions with Deep Taylor Decomposition; Pattern Recognition 65:211{222, DOI 10.1016/j.patcog.2016.11.008.

Die Implementierung kann beispielsweise in Python in Form der Bibliotheken TensorFlow 1.13.1 (siehe Abadi M, Agarwal A, Barham P, Brevdo E, Chen Z, Citro C, Corrado G, Davis A, Dean J, Devin M, Ghemawat S, Goodfellow I, Harp A, Irving G, Isard M, Jia Y, Jozefowicz R, Kaiser L, Kudlur M, Zheng X (2016) TensorFlow: Large-Scale Machine Learning on Heterogeneous Distributed Systems. arXiv preprint URL https://arxiv.org/pdf/1603.04467.pdf) und Keras 2.2.4 (siehe Chollet F (2015) Keras. URL https://keras.io) erfolgen. Weiterhin kann die Python-Bibliothek "iNNvestigate" (Alber, M., et al.: iNNvestigate neural networks!. J. Mach. Learn. Res. 20(93), 1-8 (2019)) eingesetzt werden.

Weiter bevorzugt erfolgt die Ausgabe in Form einer heatmap. Die heatmap kann zwei Farben aufweisen, insbesondere rot und blau, mit denen besonders relevante bzw. besonders irrelevante Aufnahmepixel gekennzeichnet werden. Durchschnittlich relevante Aufnahmepixel können durch Zwischentöne zwischen den beiden Farben oder grau gekennzeichnet werden. Hierdurch ist die Ausgabe besonders intuitiv erfassbar.

Bei der Aufnahme handelt es sich vorzugsweise um ein Foto, besonders bevorzugt ein Farbfoto, insbesondere in Form eines RGB-Fotos, oder um eine 3D-Punktwolke.

3D-Punktwolken sind etwas aufwändiger zu erstellen, da sie Tiefeninformationen beinhalten. Die Tiefeninformationen können bei der Erstellung der Aufnahme insbesondere durch Lichtschnitt bzw. durch Triangulation aus unterschiedlichen Winkeln gewonnen werden. Es hat sich jedoch gezeigt, dass Farbfotos besonders geeignet bzw. ausreichend sind, da die verschiedenen Schneidparameter von dem neuronalen Netz vor allem an den unterschiedlichen Färbungen der Schnittkante erkannt werden.

Die Aufnahme wird mit einer Foto- und/oder Videokamera erstellt. Entsprechend der Erfindung ist die Kamera Teil der Werkzeugmaschine, um eine gleich bleibende Aufnahmesituation sicherzustellen. Alternativ oder zusätzlich dazu kann die Kamera Teil einer Fotobox (photo booth) sein, um Umgebungseinflüsse bei der Erstellung der Aufnahme zu reduzieren.

Entsprechend der Erfindung umfasst das erfindungsgemäße Verfahren das Erstellen der Schnittkante mit der Werkzeugmaschine. Bei dem Schneidverfahren der Werkzeugmaschine kann es sich um ein thermisches Schneidverfahren, insbesondere ein Plasmaschneidverfahren, vorzugsweise ein Laserschneidverfahren, handeln. Die ermittelten Schneidparameter im Falle eines Laserschneidverfahrens umfassen vorzugsweise Strahlparameter, insbesondere Fokusdurchmesser bzw. Laserleistung; Transportparameter, insbesondere Fokusposition, Düsen-Fokusabstand bzw. Vorschub; Gasdynamikparameter, insbesondere Gasdruck bzw. Düsen-Werkstückabstand; und/oder Materialparameter, insbesondere Gas-Reinheitsgrad bzw. Schmelztemperatur des Werkstücks. Diese Schneidparameter haben sich als besonders prägend für das Erscheinungsbild der Schnittkante erwiesen. Die erfindungsgemäße Aufgabe wird weiterhin gelöst durch ein Computerprogrammprodukt zur Durchführung der hier beschriebenen Rechenoperation, siehe Anspruch 10. Das Computerprogrammprodukt kann teilweise, insbesondere vollständig, cloud-basiert ausgebildet sein, um mehreren Nutzern den Zugang zum Computerprogrammprodukt zu ermöglichen. Weiterhin kann ein umfassenderes Training des neuronalen Netzes durch mehrere Nutzer erfolgen.

Die erfindungsgemäße Aufgabe wird schließlich gelöst durch eine Vorrichtung zur Durchführung des hier beschriebenen Verfahrens, wobei die Vorrichtung die Werkzeugmaschine, insbesondere in Form einer Laserschneidmaschine, aufweist, siehe Anspruch 9.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung, die in den Ansprüchen definiert ist.

### Detaillierte Beschreibung der Erfindung und Zeichnung

- Fig. 1: zeigt eine schematische Darstellung einer Werkzeugmaschine in Form einer Laserschneidmaschine zur Erläuterung wesentlicher Schneidparameter.
- Fig. 2: zeigt eine schematische Übersicht des erfindungsgemäßen Verfahrens mit den Verfahrensschritten:
A) Erstellen der Schnittkante mit mehreren Schneidparametern;
B) Erstellen einer Aufnahme der Schnittkante;
C) Einlesen der Aufnahme;
D) Analyse der Aufnahme mit einem neuronalen Netz zur Ermittlung der Schneidparameter;
E) Rückpropagation des neuronalen Netzes zur Ermittlung der Relevanz der Aufnahmepixel bezüglich der ermittelten Schneidparameter; und
F) gekennzeichnete Darstellung der relevanten bzw. irrelevanten Aufnahmepixel.

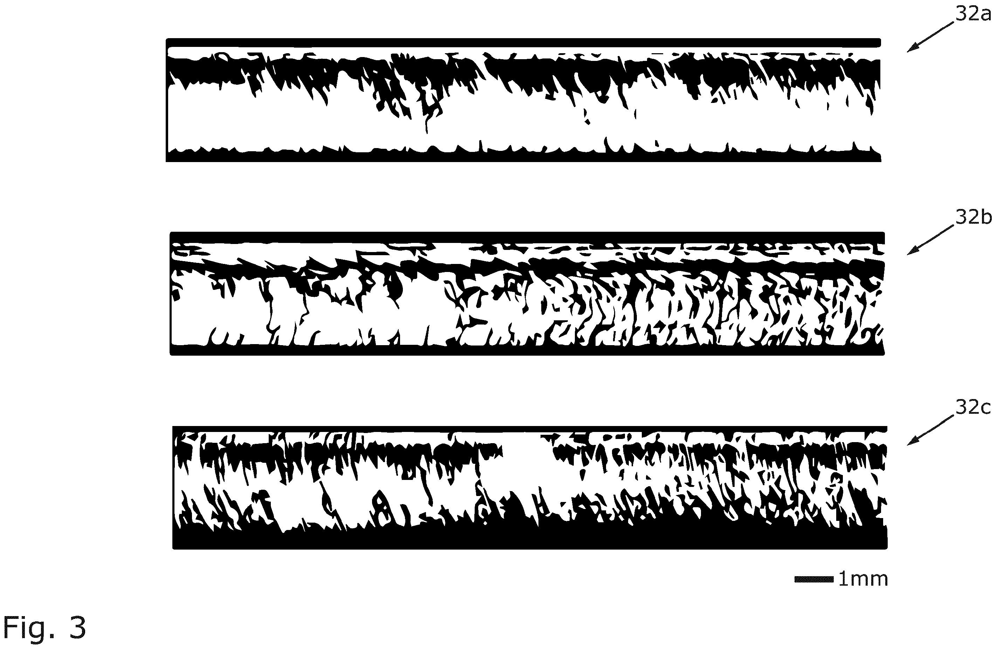

- Fig. 3: zeigt Aufnahmen verschiedener Schnittkanten.

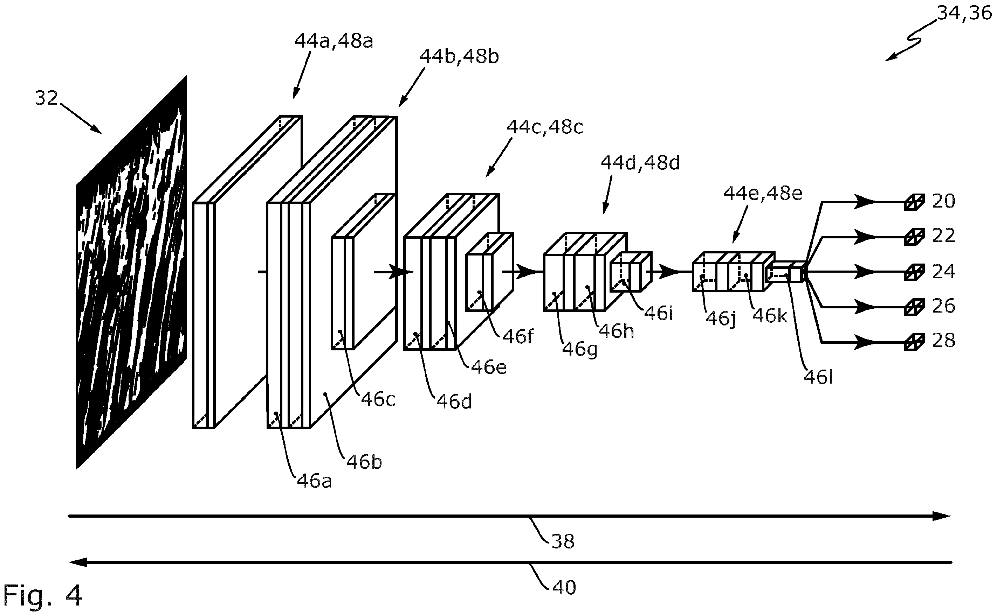

- Fig. 4: zeigt schematisch die Funktionsweise des neuronalen Netzes bzw. der Rückpropagation.

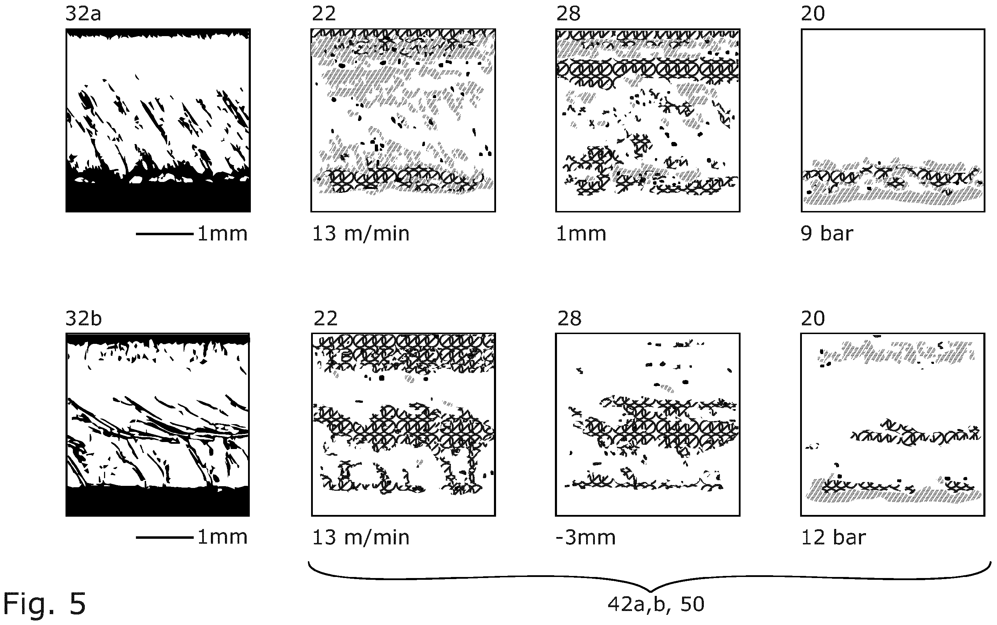

- Fig. 5: zeigt in der linken Spalte Aufnahmen zweier Schnittkanten und in den weiteren Spalten ermittelte Schneidparameter und Ausgaben der Aufnahmen unter Hervorhebung der für die ermittelten Schneidparameter relevanten Aufnahmepixel.

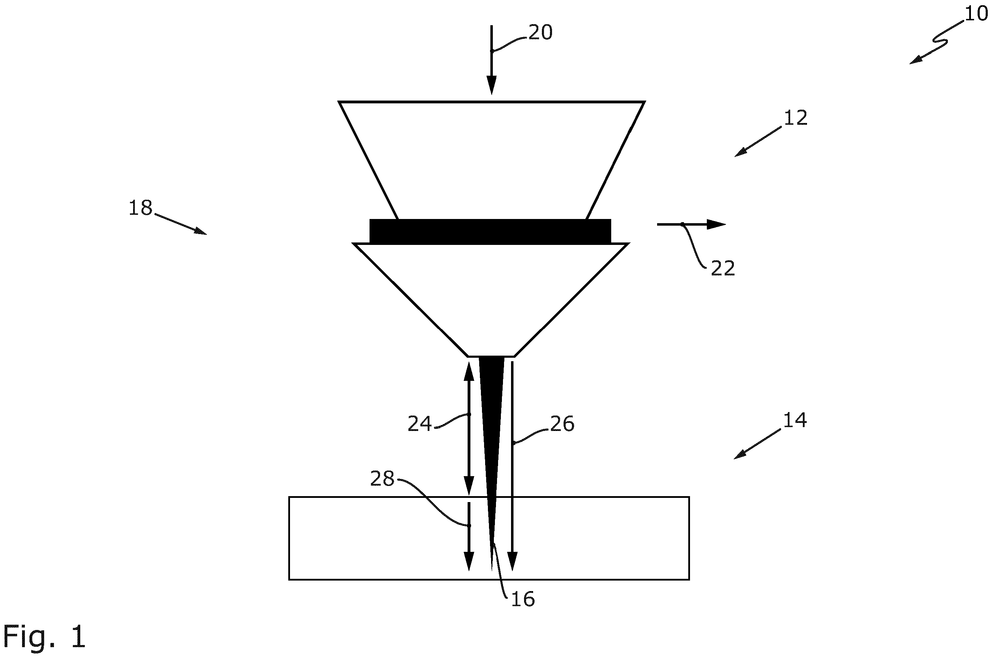

**Fig. 1** zeigt einen Teil einer Werkzeugmaschine **10** in Form einer Laserschneidmaschine. Ein Schneidkopf **12** überfährt dabei ein Werkstück **14** unter Laser- und Gasbestrahlung des Werkstücks 14. Hierbei wird eine Schnittkante **16** erzeugt. Die Schnittkante 16 wird insbesondere durch folgende Schneidparameter **18** beeinflusst: Gasdruck **20,** Vorschub **22,** Düsen-Werkstückabstand **24,** Düsen-Fokusabstand **26** und/oder Fokusposition **28.**

Der Einfluss der einzelnen Schneidparameter 18 auf das Aussehen der erzielten Schnittkante 16 ist selbst für Experten weitestgehend nicht nachvollziehbar. Kommt es beispielsweise zur Riefenbildung an der Schnittkante 16, müssen die Schneidparameter 18 variiert werden, bis die Riefenbildung verschwindet, wobei mit der Variation einerseits ein großer Material-, Energie- und Zeitverbrauch einhergeht und es andererseits oftmals vorkommt, dass durch die Variation neue Artefakte geschaffen werden. Es besteht daher das Bedürfnis, ein Verfahren und eine Vorrichtung bereitzustellen, die den Merkmalen einer Schnittkante 16 gezielt Schneidparameter 18 zuordnet. Diese Schneidparameter 18 können dann geändert werden, um das Merkmal der Schnittkante 16 zu ändern. Die Erfindung löst daher ein Problem, das von menschlichen Nutzern aufgrund der Komplexität des Problems nicht gelöst werden kann ("superhuman performance").

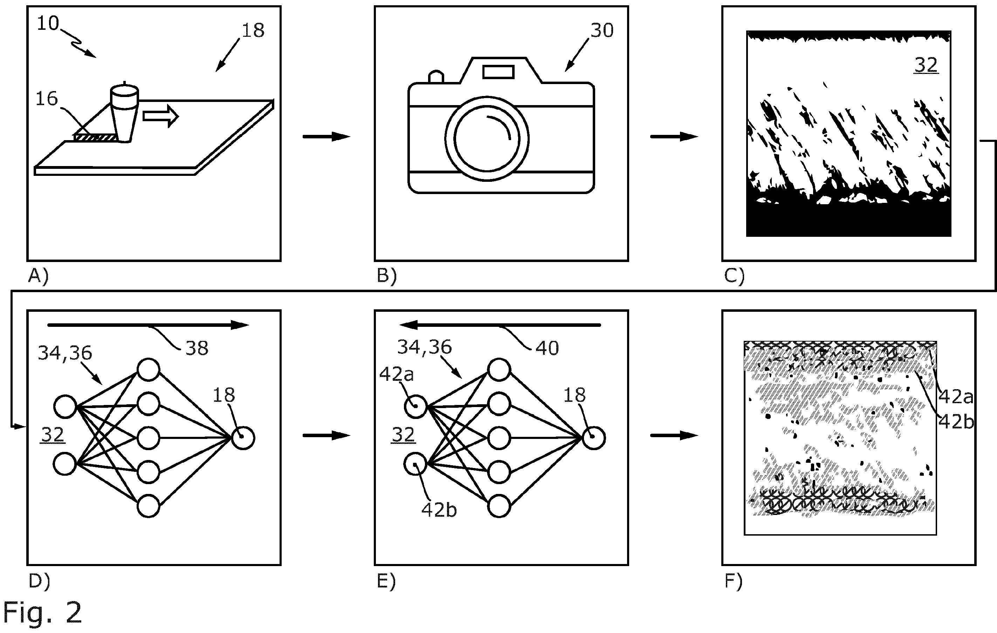

**Fig. 2** zeigt das erfindungsgemäße Verfahren im Überblick. Im Verfahrensschritt A) wird die Schnittkante 16 unter Verwendung der Schneidparameter 18 durch die Werkzeugmaschine 10 erzeugt. Im Verfahrensschritt B) wird die Schnittkante 16 (siehe Verfahrensschritt A)) unter Verwendung einer Kamera **30** aufgenommen. Die Kamera 30 kann in Form einer Fotokamera und/oder einer Videokamera ausgebildet sein. Im Verfahrensschritt C) wird die erstellte Aufnahme **32** eingelesen. Im Verfahrensschritt D) wird die Aufnahme 32 von einem Algorithmus **34** analysiert. Der Algorithmus 34 weist ein neuronales Netz **36** auf. Das neuronale Netz 36 dient der Ermittlung **38** der Schneidparameter 18. Die ermittelten Schneidparameter 18 können mit den eingestellten Schneidparametern 18 (siehe Verfahrensschritt A)) verglichen werden, beispielsweise um einen Defekt der Werkzeugmaschine 10 (siehe Verfahrensschritt A)) zu ermitteln.

Im Verfahrensschritt E) erfolgt durch den Algorithmus 34 eine Rückpropagation **40** im neuronalen Netz 36. Durch die Rückpropagation 40 der Schneidparameter 18 zur Aufnahme 32 wird die Relevanz einzelner Aufnahmepixel **42a, 42b** der Aufnahme 40 bei der Ermittlung der Schneidparameter 18 im Verfahrensschritt D) festgestellt. Im Verfahrensschritt F) werden die Aufnahmepixel 42a, b dargestellt (wobei in Fig. 2 aus Gründen der Übersichtlichkeit nur die Aufnahmepixel 42a, b mit einem Bezugszeichen versehen sind) und mit ihrer jeweiligen Relevanz gekennzeichnet. Vorliegend ist das besonders relevante Aufnahmepixel 42a in einer ersten Farbe (beispielsweise rot) und das besonders irrelevante Aufnahmepixel 42b in einer zweiten Farbe (beispielsweise blau oder grau) gekennzeichnet. Aufgrund von Formalvorgaben sind in der vorliegenden Beschreibung die verschiedenen Farben durch verschiedene Muster (Schraffierungen) dargestellt. Anhand der besonders relevanten Aufnahmepixel 42a kann ein Nutzer unmittelbar erkennen, welche Bereiche der aufgenommenen Schnittkante 16 (siehe Verfahrensschritt A)) besonders durch den jeweils ermittelten Schneidparameter 18 (siehe Verfahrensschritt D)) beeinflusst wird.

**Fig. 3** zeigt beispielhaft drei Aufnahmen **32a, 32b, 32c,** wobei die Aufnahmen 32a-c mit verschiedenen Schneidparametern 18 (siehe Fig. 1) erstellt wurden:

| | | |
|---|---|---|
| Aufnahme 32a: | Gasdruck 20 | 15bar |
| | Vorschub 22 | 21m/min |
| | Düsen-Werkstückabstand 24 | 1,5mm |
| | Düsen-Fokusabstand 26 | -2mm |

Aufnahme 32b wurde demgegenüber mit vergrößertem Düsen-Fokusabstand 26 erstellt. Aufnahme 32c wurde gegenüber Aufnahme 32a mit verringertem Vorschub 22 erstellt. Aus Fig. 3 ist ersichtlich, dass der Einfluss der Schneidparameter 18 (siehe Fig. 1) für menschliche Nutzer nicht unmittelbar den Aufnahmen 32a-c entnehmbar ist.

**Fig. 4** zeigt schematisch den Algorithmus 34 bzw. das neuronale Netz 36. Das neuronale Netz 36 ist in Form eines convolutional neural network mit mehreren Blöcken **44a, 44b, 44c, 44d, 44e** aufgebaut. Dabei ist ein Eingangsblock 44a vorgesehen. Die Blöcke 44b-e weisen jeweils drei convolutional layer **46a, 46b, 46c, 46d, 46e, 46f, 46g, 46h, 46i, 46j, 46k, 461** auf. Die Blöcke 44a-e weisen Filter **48a, 48b, 48c, 48d, 48e** auf. Jede Schicht des Eingangsblocks 44a weist 32 Filter 48a auf. Die Schichten des Blocks 44b weisen ebenfalls 32 Filter 48b auf. Die Schichten des Blocks 44c weisen 64 Filter 48c auf. Die Schichten des Blocks 44d weisen 128 Filter 48d auf und die Schichten des Blocks 44e weisen 256 Filter 48e auf. Die Filter 48a-e können zu einer Verringerung der Auflösung der Aufnahme 32 (z.B. von 200 Pixel x 200 Pixel auf 7 Pixel x 7 Pixel) bei gleichzeitiger Erhöhung der Tiefe (bzw. Anzahl der Kanäle) führen. Die Filter 48a-e der dritten Schicht jedes Blocks 44a-e führen zu einer Verringerung der Auflösung. Hier werden convolutional layer auf für das Pooling verwendet. Die Tiefe erhöht sich von einem Block 44a-e zum nächsten. Beispielsweise besteht der Block 44b aus drei convolutional layer, jeweils mit 32 Filtern. In den ersten beiden ist die räumliche Auflösung 112 x 112 Pixel. Von der zweiten zur dritten reduziert sich die räumliche Auflösung von 112 x 112 Pixel auf 56 x 56 Pixel. Beim Übergang von Block 44b (letzte Schicht) zu Block 44c (erste Schicht) vergrößert sich die Tiefe von 32 auf 64. Die räumliche Auflösung bleibt gleich.

Das neuronale Netz 36 ermöglicht hierdurch eine Ermittlung 38 der Schneidparameter 18. Bei der Rückpropagation 40 wird vorliegend die layer-wise relevance propagation eingesetzt. Deren Ergebnisse sind in Fig. 5 dargestellt.

**Fig. 5** zeigt in der oberen Spalte die Aufnahme 32a und in der unteren Spalte die Aufnahme 32b. In jeder Spalte sind die Aufnahmen 32a, b mehrfach wiedergegeben, wobei in der zweiten Spalte die vom Vorschub 22 stark oder wenig beeinflussten Aufnahmepixel 42a, b, in der dritten Spalte die von der Fokusposition 28 stark oder wenig beeinflussten Aufnahmepixel 42a, b und in der vierten Spalte die vom Gasdruck 20 stark oder wenig beeinflussten Aufnahmepixel 42a, b hervorgehoben sind. Die Ausgaben **50** können dabei in Form von heatmaps vorliegen.

Die vom jeweiligen Schneidparameter 18 (siehe Fig. 1) besonders wenig beeinflussten Aufnahmepixel 42b dienen primär der Überprüfung der Plausibilität der Ausgaben 50. Vorzugsweise werden in den Ausgaben 50 lediglich die besonders stark vom jeweiligen Schneidparameter 18 (siehe Fig. 1) beeinflussten Aufnahmepixel 42a hervorgehoben, um einem Nutzer die Handhabung der Ausgaben 50 zu erleichtern.

Unter Vornahme einer Zusammenschau aller Figuren der Zeichnung betrifft die Erfindung zusammenfassend ein Verfahren zur Erkennung von Schneidparametern 18, die für bestimmte Merkmale einer Schnittkante 16 besonders wichtig sind. Dabei wird eine Aufnahme 32, 32a-c der Schnittkante 16 von einem Algorithmus 34 mit einem neuronalen Netz 36 zur Ermittlung 38 der Schneidparameter 18 analysiert. Durch Rückpropagation 40 dieser Analyse werden diejenigen Aufnahmepixel 42a, b identifiziert, die für die Bestimmung der Schneidparameter 18 eine signifikante Rolle spielen. Eine Ausgabe 50 in Form einer Darstellung dieser signifikanten Aufnahmepixel 42a, b, insbesondere in Form einer heatmap, zeigt einem Nutzer des Verfahrens auf, welche Schneidparameter 18 zur Verbesserung der Schnittkante 16 geändert werden müssen. Die Erfindung betrifft weiterhin ein Computerprogrammprodukt bzw. eine Vorrichtung zur Durchführung des Verfahrens.

### Bezugszeichenliste

- 10: Werkzeugmaschine
- 12: Schneidkopf
- 14: Werkstück
- 16: Schnittkante
- 18: Schneidparameter
- 20: Gasdruck
- 22: Vorschub
- 24: Düsen-Werkstückabstand
- 26: Düsen-Fokusabstand
- 28: Fokusposition
- 30: Kamera
- 32, 32a-c: Aufnahme
- 34: Algorithmus
- 36: neuronales Netz
- 38: Ermittlung der Schneidparameter 18
- 40: Rückpropagation
- 42a, b: Aufnahmepixel
- 44a-e: Blöcke des neuronalen Netzes 36
- 46a-l: layer des neuronalen Netzes 36
- 48a-e: Filter des neuronalen Netzes 36
- 50: Ausgabe

## Patentansprüche

1. Verfahren zur Analyse einer von einer Werkzeugmaschine (10) erstellten Schnittkante (16), mit den Verfahrensschritten:
A) Erstellen der Schnittkante (16) unter Verwendung zumindest eines Schneidparameters (18) mit der Werkzeugmaschine (10);
B) Erstellen zumindest einer Aufnahme (32, 32a-c) der Schnittkante (16) mit einer Kamera (30);
C) Einlesen der Aufnahme (32, 32a-c) der Schnittkante (16), wobei die Aufnahme (32, 32a-c) eine Vielzahl von Aufnahmepixeln (42a, b) aufweist;
**gekennzeichnet durch** die Verfahrensschritte:
D) Analyse der Aufnahme (32, 32a-c) mit einem trainierten neuronalen Netz (36) zur Ermittlung des zumindest einen Schneidparameters (18);
E) Rückpropagation (40) des neuronalen Netzes (36) zur Ermittlung der Relevanz der für die Bestimmung der ermittelten Schneidparameter (18) analysierten Aufnahmepixel (42a, b);
F) Ausgabe der Aufnahme (32, 32a-c) unter Kennzeichnung der im Verfahrensschritt E) bestimmten besonders relevanten und/oder besonders irrelevanten Aufnahmepixel (42a, b);
wobei die Schritte C) bis F) von einem Computer durchgeführt werden.

2. Verfahren nach Anspruch 1, bei dem die Analyse im Verfahrensschritt D) mit einem convolutional neural network mit mehreren layern (46a-l), insbesondere mit mehreren Filtern (48a-e) pro layer (46a-l), erfolgt.

3. Verfahren nach Anspruch 1 oder 2, bei dem die Rückpropagation (40) im Verfahrensschritt E) durch layer-wise relevance propagation erfolgt.

4. Verfahren nach einem der vorhergehenden Ansprüche, bei dem die Zuordnung der Relevanz im Verfahrensschritt E) auf deep Taylor decomposition basiert.

5. Verfahren nach einem der vorhergehenden Ansprüche, bei dem die Ausgabe im Verfahrensschritt F) in Form einer heatmap erfolgt.

6. Verfahren nach einem der vorhergehenden Ansprüche, bei dem die Aufnahme (32, 32a-c) im Verfahrensschritt C) in Form eines RGB-Fotos oder einer 3D-Punktwolke vorliegt.

7. Verfahren nach einem der vorhergehenden Ansprüche, wobei die Kamera (30) eine Kamera (30) der Werkzeugmaschine (10) ist.

8. Verfahren nach einem der vorhergehenden Ansprüche, bei dem die Werkzeugmaschine (10) in Form einer Laserschneidmaschine ausgebildet ist, wobei im Verfahrensschritt D) insbesondere folgende Schneidparameter (18) ermittelt werden:
• Strahlparameter, insbesondere Fokusdurchmesser und/oder Laserleistung;
• Transportparameter, insbesondere Fokusposition (28), Düsen-Fokusabstand (26) und/oder Vorschub (22);
• Gasdynamikparameter, insbesondere Gasdruck (20) und/oder Düsen-Werkstückabstand (24); und/oder
• Materialparameter, insbesondere Gas-Reinheitsgrad und/oder Schmelztemperatur des Werkstücks (14).

9. Vorrichtung mit einer Werkzeugmaschine (10), insbesondere in Form einer Laserschneidmaschine, einem Computer und einer Kamera (30), wobei der Computer mit einem neuronalen Netz so programmiert ist, dass er die Schritte des Verfahrens nach einem der vorgehenden Ansprüche ausführt.

10. Computerprogrammprodukt umfassend Befehle, die bewirken, dass die Vorrichtung des Anspruchs 9 die Verfahrensschritte nach einem der Ansprüche 1 bis 8 ausführt, wobei das Computerprogrammprodukt das neuronale Netz (36) aufweist.

## Claims

1. A method of analyzing a cut edge (16) created by a machine tool (10), comprising the method steps:
A) creating the cut edge (16) using at least one cutting parameter (18) with the machine tool (10);
B) creating at least one image (32, 32a-c) of the cut edge (16) with a camera (30);
C) scanning the image (32, 32a-c) of the cut edge (16), wherein the image (32, 32a-c) comprises a plurality of image pixels (42a, b);
**characterized by** the method steps:
D) analyzing the image (32, 32a-c) with a trained neuronal network (36) to determine the at least one cutting parameter (18);
E) backpropagation (40) of the neuronal network (36) to determine the relevance of the image pixels (42a, b) analyzed to determine the determined cutting parameters (18);
F) output of the image (32, 32a-c) with identification of the particularly relevant and/or particularly irrelevant image pixels (42a, b) determined in method step E);
wherein steps C) to F) are performed by a computer.

2. The method according to claim 1, in which the analysis in method step D) is carried out using a convolutional neural network with a plurality of layers (46a-l), in particular with a plurality of filters (48a-e) per layer (46a-l).

3. The method according to claim 1 or 2, wherein the backpropagation (40) in method step E) is performed by layer-wise relevance propagation.

4. The method according to any one of the preceding claims, wherein the assignment of relevance in method step E) is based on deep Taylor decomposition.

5. The method according to any one of the preceding claims, wherein the output in method step F) is in the form of a heatmap.

6. The method according to any one of the preceding claims, wherein the image (32, 32a-c) in method step C) is present in the form of an RGB photo or a 3D point cloud.

7. The method according to any one of the preceding claims, wherein the camera (30) is a camera (30) of the machine tool (10).

8. The method according to one of the preceding claims, wherein the machine tool (10) is designed in the form of a laser cutting machine, wherein the following cutting parameters (18) in particular are determined in method step D):
• beam parameters, in particular focal diameter and/or laser power;
• transport parameters, in particular focus position (28), nozzle focus distance (26) and/or feed rate (22);
• gas dynamics parameters, in particular gas pressure (20) and/or nozzle-workpiece distance (24); and/or
• material parameters, in particular gas purity and/or melting temperature of the workpiece (14).

9. An apparatus with a machine tool (10), in particular in the form of a laser cutting machine, a computer and a camera (30), wherein the computer is programmed with a neuronal network so as to perform the steps of the method according to any one of the preceding claims.

10. A computer program product comprising instructions that cause the apparatus of claim 9 to perform the method steps according to any one of claims 1 to 8, wherein the computer program product comprises the neuronal network (36).

## Revendications

1. Procédé d'analyse d'un bord de coupe (16) créé par une machine-outil (10), avec les étapes de procédé suivantes :
A) création du bord de coupe (16) à l'aide d'au moins un paramètre de découpe (18) avec la machine-outil (10) ;
B) création d'au moins une prise de vue (32, 32a-c) du bord de coupe (16) avec une caméra (30) ;
C) lecture de la prise de vue (32, 32a-c) du bord de coupe (16), dans laquelle la prise de vue (32, 32a-c) comporte une pluralité de pixels de prise de vue (42a, b) ;
**caractérisé par** les étapes de procédé :
D) analyse de la prise de vue (32, 32a-c) à l'aide d'un réseau neuronal entraîné (36) pour la détermination dudit au moins un paramètre de découpe (18) ;
E) rétropropagation (40) du réseau neuronal (36) pour la détermination de la pertinence des pixels de prise de vue (42a, b) analysés pour l'identification des paramètres de découpe (18) déterminés ;
F) restitution de la prise de vue (32, 32a-c) avec repérage des pixels de prise de vue (42a, b) identifiés comme particulièrement pertinents et/ou particulièrement non pertinents à l'étape de procédé E) ;
dans lequel les étapes C) à F) sont mises en œuvre par un ordinateur.

2. Procédé selon la revendication 1, où l'analyse à l'étape de procédé D) est réalisée avec un réseau neuronal convolutif doté de plusieurs couches (46a-l), en particulier plusieurs filtres (48a-e) par couche (46a-l).

3. Procédé selon la revendication 1 ou 2, où la rétropropagation (40) à l'étape de procédé E) est réalisée par propagation de pertinence couche par couche (layer-wise relevance propagation).

4. Procédé selon l'une des revendications précédentes, où l'attribution de la pertinence à l'étape de procédé E) est basée sur deep Taylor decomposition.

5. Procédé selon l'une des revendications précédentes, où la restitution à l'étape de procédé F) est réalisée sous la forme d'une carte thermique (heatmap).

6. Procédé selon l'une des revendications précédentes, où la prise de vue (32, 32a-c) à l'étape de procédé C) se présente sous la forme d'une photo RGB ou d'un nuage de points 3D.

7. Procédé selon l'une des revendications précédentes, dans lequel la caméra (30) est une caméra (30) de la machine-outil (10).

8. Procédé selon l'une des revendications précédentes, où la machine-outil (10) est conçue sous la forme d'une machine de découpe laser, dans lequel les paramètres de découpe (18) suivants sont en particulier déterminés à l'étape de procédé D) :
• paramètres de faisceau, en particulier diamètre du foyer et/ou puissance du laser ;
• paramètres de transport, en particulier position du foyer (28), distance buse-foyer (26) et/ou avance (22) ;
• paramètres de dynamique des gaz, en particulier pression du gaz (20) et/ou distance buse-pièce (24) ; et/ou
• paramètres du matériau, en particulier degré de pureté du gaz et/ou température de fusion de la pièce (14).

9. Dispositif avec une machine-outil (10), en particulier sous la forme d'une machine de découpe laser, d'un ordinateur et d'une caméra (30), dans lequel l'ordinateur est programmé avec un réseau neuronal, de manière à ce qu'il exécute les étapes du procédé selon l'une des revendications précédentes.

10. Produit de programme informatique comprenant des instructions amenant le dispositif de la revendication 9 à exécuter les étapes de procédé selon l'une des revendications 1 à 8, dans lequel le produit de programme informatique comporte le réseau neuronal (36).
